(19) Europäisches Patentamt
European Patent Office
Office européen des brevets

(11) Veröffentlichungsnummer: **0 258 853**
**B1**

(12) # EUROPÄISCHE PATENTSCHRIFT

(45) Veröffentlichungstag der Patentschrift: **11.07.90**

(21) Anmeldenummer: **87112625.6**

(22) Anmeldetag: **29.08.87**

(51) Int. Cl.[5]: **C07C 211/35**, C07C 211/40, C07C 215/02, C07C 215/20, C07C 215/26, C07C 217/00, C07C 217/52, A01N 33/04, A01N 33/08

(54) **4-substituierte Cyclohexylaminderivate, diese enthaltende Fungizide sowie Verfahren zur Bekämpfung von Pilzen.**

(30) Priorität: **05.09.86 DE 3630344**

(43) Veröffentlichungstag der Anmeldung: **09.03.88 Patentblatt 88/10**

(45) Bekanntmachung des Hinweises auf die Patenterteilung: **11.07.90 Patentblatt 90/28**

(84) Benannte Vertragsstaaten: **AT BE CH DE ES FR GB GR IT LI NL SE**

(56) Entgegenhaltungen:
**EP-A- 0 224 163**
**DE-A- 2 251 891**
**DE-A- 2 330 454**
**GB-A- 489 190**
**US-A- 3 882 179**

**ORGANIC CHEMISTRY, Band 48, 1983 R.O. HUTCHINS et al. "Stereoselective reductions of substituted cyclohexyl and cyclopenthyl arbon-nitrogen system with hydride reagents" Seiten 3412-342**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen(DE)**

(72) Erfinder: **Sauter, Hubert, Dr., Neckarpromenade 20, D-6800 Mannheim 1(DE)**
Erfinder: **Zipplies, Matthias, Dr., Kastanienweg 1, D-6945 Hirschberg(DE)**
Erfinder: **Goetz, Norbert, Dr., Schoefferstrasse 25, D-6520 Worms 1(DE)**
Erfinder: **Ammermann, Eberhard, Dr., Sachsenstrasse 3, D-6700 Ludwigshafen(DE)**
Erfinder: **Pommer, Ernst-Heinrich, Dr., Berliner Platz 7, D-6703 Limburgerhof(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die Erfindung betrifft trans-4-substituierte Cyclohex(en)ylaminderivate, sowie Verfahren zu ihrer Herstellung, deren Verwendung als Fungizide, fungizide Mischungen sowie Verfahren zur Bekämpfung von Schadpilzen mit diesen Wirkstoffen.

Die Verbindung 4-trans-tert.-Butyl-N-benzyl-cyclohexylamin ist bekannt (J. Org. Chem. 48, 3412 (1983)), jedoch wirkt sie nicht nennenswert fungizid.

Es ist ferner bekannt, 4-tertiär-Butyl-cyclohexylaminalkane mit 8 bis 18 Kohlenstoffatomen im Alkanrest als Mikrobicide zu verwenden (DE-A 2 330 454). Ihre fungizide Wirkung ist jedoch unbefriedigend.

Es wurde nun gefunden, daß gewisse Cyclohexylaminderivate bei guter Pflanzenverträglichkeit stark fungizid wirken.

Gegenstand der Erfindung sind trans-4-substituierte Cyclohexylamine und deren Derivate der Formel I

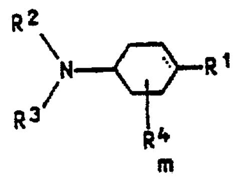

in der $R^1$ die Gruppe $CR^5R^6R^7$ bedeutet, in welcher $R^5$, $R^6$, $R^7$ gleich oder verschieden sind und Wasserstoff, verzweigtes oder unverzweigtes, gegebenenfalls mit Hydroxy substituiertes $C_1$–$C_8$-Alkyl, $C_1$–$C_6$-Alkoxy, $C_1$–$C_6$-Alkyl-thio oder $C_3$–$C_6$-Cycloalkyl bedeuten, mit der Maßgabe, daß höchstens einer der Substituenten $R^5$, $R^6$ oder $R^7$ Wasserstoff sein darf, oder in welcher $R^5$ eine der vorstehend angegebenen Bedeutungen hat und $R^6$ und $R^7$ gemeinsam mit dem eingeschlossenen C-Atom einen drei-bis sechsgliedrigen carbocyclischen aliphatischen Ring bilden,

$R^2$, $R^3$ gleich oder verschieden sind und Wasserstoff, $C_1$–$C_{20}$-Alkyl, $C_2$–$C_4$-Alkenyl oder $C_3$–$C_4$-Alkinyl oder $C_3$–$C_{12}$-Cycloalkyl oder $C_5$–$C_8$-Cycloalkenyl bedeuten, die ihrerseits wiederum substituiert sein können mit Hydroxy, $C_1$–$C_8$-Alkoxy, $C_1$–$C_6$-Alkylthio, $C_1$–$C_8$-Alkyl, $C_2$–$C_4$-Alkenyl, $C_3$–$C_4$-Alkinyl oder ggf. substituiertem $C_3$–$C_{12}$-Cycloalkyl oder mit Phenyl, Naphthyl. Phenoxy oder Naphtoxy, die ihrerseits ggf. durch $C_1$–$C_8$-Alkyl, $C_2$–$C_4$-Alkenyl, $C_3$–$C_4$-Alkinyl oder $C_3$–$C_6$-Cycloalkyl oder $C_5$–$C_8$-Cycloalkenyl.

$C_2$–$C_8$-Alkoxy, Halogen oder Trifluormethyl substituiert sein können, mit der Maßgabe, daß die Summe der Kohlenstoff- und Heteroatome (O, S, Halogen) von $R^2$ und $R^3$ zusammen mindestens 8 beträgt.

$R_4$ gleiche oder verschiedene Substituenten in beliebiger sterischer Anordnung, ausgewählt aus Wasserstoff, $C_1$- bis $C_8$-Alkyl, $C_3$- bis $C_8$-Cycloalkyl oder $C_1$- bis $C_8$-Alkoxy sowie m die Zahlen 1 bis 4 bedeutet, sowie deren Salze außer den Verbindungen, in denen gleichzeitig $R^1$ tertiär-Butyl, einer der beiden Reste $R^2$ und $R^3$ Wasserstoff und der andere Rest unsubstituiertes $C_8$–$C_{12}$-Alkyl und $R^4$ Wasserstoff bedeutet.

Die Bindung $\overline{\cdots}$ kann als Doppelbindung (4-substituiertes Cyclohexenylamin) oder als Einfachbindung (4-trans-substituiertes Cyclohexylamin) vorliegen. Als Wirkstoffe kommen aus praktischen Gründen auch Salze der erfindungsgemäßen Amine in Betracht.

Darunter sind die Salze der Amine mit beliebigen anorganischen und organischen Säuren zu verstehen z. B. mit Chlorwasserstoff, Essigsäure, Schwefelsäure, Dodecylbenzolsulfonsäure, Palmitinsäure.

$R_1$ bedeutet beispielsweise: $C_3$–$C_8$-Alkyl, Isopropyl, n-But-2-yl, tert.-Butyl, n-Pent-2-yl, n-Pent-3-yl, 2-Methyl-but-2-yl, 3-Methyl-but-2-yl, n-Hex-2-yl, n-Hex-3-yl, 1,1-Dimethylbutyl, n-Butyl, Heptyl, 2-Methyl-hex-2-yl, n-Octyl, 1,1,3,3-Tetramethylbutyl, 1-Methoxyethyl, 1-Ethoxyethyl, 2-Methoxy-prop-2-yl, 2-Ethoxy-prop-2-yl, 1-Cyclopropylethyl, 1-Cyclobutylethyl, 1-Cyclopentylethyl, 1-Cyclohexylethyl, 2-Cyclopropyl-prop-2-yl, 2-Cyclobutyl-prop-2-yl, 2-Cyclopentyl-prop-2-yl, 2-Cyclohexyl-prop-2-yl, Cyclohexen-1-yl, Cyclopropyl, Cyclobutyl, Cyclopentyl, Cyclohexyl, Cycloheptyl, 1-Methyl-cyclohex-1-yl, 1-Ethyl-cyclohex-1-yl, 4(4-tert.-Butylcyclohexyl)cyclohexyl.

$R^2$ und $R^3$ bedeuten unabhängig voneinander beispielsweise: Wasserstoff, $C_1$–$C_{18}$-Alkyl, Methyl, Ethyl, Propyl, Isopropyl, n-Butyl, iso-Butyl, n-Pentyl, 3-Methylbut-2-yl, Isopentyl, n-Hexyl, n-Heptyl, 4,4-Dimethyl-pentyl, n-Octyl, 6,6-Dimethylhept-2-yl, n-Nonyl, 3,5,5-Trimethylhexyl, n-Decyl, 3,7-Dimethyloct-2-yl, n-Undecyl, n-Dodecyl, n-Eicosyl, Allyl, Propargyl, Cyclopropyl, Cyclododecyl, 4-tert.-Butyl-cyclohexylmethyl, 4-Neopentylcyclohexylmethyl, 4-(1,1,3,3-Tetramethylbutyl)cyclohexylmethyl, Alkylbenzyl, 4-Methylbenzyl, 4-Isopropylbenzyl, 4-tert.-Butylbenzyl, 4-Neopentylbenzyl, 4-(1,1,3,3-Tetramethylbutyl)benzyl, Trifluormethyl-benzyl, 4-Trifluormethylbenzyl, Halogenbenzyl, 4-Chlorbenzyl, 2,4-Dichlorbenzyl, 4-Methoxybenzyl, 4-tert.-Butoxybenzyl, 2-Chlor-4-Phenyl-benzyl, α-Naphthylmethyl, β-Naphthylmethyl, 3-(4-tertiär-Butylphenyl)-2-methyl-propyl,

$R^4$ bedeutet beispielsweise Wasserstoff, Methyl, Ethyl, n-Propyl, Methoxy, Ethoxy, Cyclohexyl.

m bedeutet beispielsweise 1, 2, 3 oder 4.

Die neuen Verbindungen können als Fungizide Verwendung finden.

Bevorzugt werden die 4-trans-substituierten Cyclohexylaminverbindungen.

Die Erfindung umfaßt auch Verfahren zur Herstellung der 4-substituierten Cyclohex(en)ylamine der Formel I.

Man kann diese Cyclohex(en)ylamine aus entsprechenden primären Aminen II

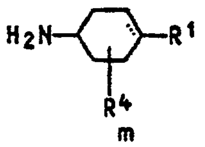

z.B. durch schrittweise Alkylierung in an sich bekannter Weise erhalten.

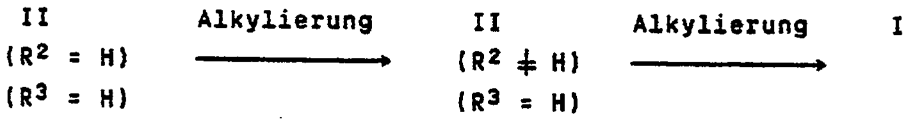


Als Alkylierungsmittel sind z.B. entsprechende Verbindungen des Typs $R^2$-X bzw. $R^3$-X geeignet, wobei X für eine elektronenanziehende Austrittsgruppe steht. Man kann anstelle der Verbindungen des vorstehenden Typs in manchen Fällen auch Aldehyde oder Ketone verwenden, wobei diese dann den allgemeinen Formeln

$$R^{11}-CHO$$

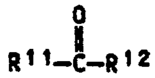

entsprechen, in welchen $R^{11}$, $R^{12}$ den Resten $R^2$ bzw. $R^3$ mit der Maßgabe entsprechen, daß sie ein C-Atom weniger als $R^2$, $R^3$ aufweisen.

Die Aldehyde bzw. Ketone werden in Gegenwart eines Reduktionsmittel und gegebenenfalls in Gegenwart eines Katalysators sowie ggf. in Gegenwart eines Lösungsmittels mit den entsprechenden primären bzw. sekundären Aminen umgesetzt.

Eine andere Möglichkeit zur Herstellung erfindungsgemäßer Amine besteht darin, daß man ein entsprechendes Imin bzw. Iminiumsalz der Formel

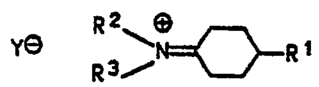 bzw. 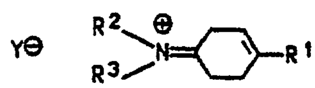

wobei $Y^\ominus$ ein beliebiges Anion bedeutet, mit einem komplexen Hydrid in Gegenwart eines Verdünnungsmittels stereoselektiv zu I reduziert.

Die zur Herstellung der erfindungsgemäßen Verbindungen als Ausgangsstoffe benötigten primären Cyclohexylamine bzw. Cyclohexenylamine sind entweder bekannt oder, z.B. durch katalytische Hydrierung von entsprechenden 4-alkyl-substituierten Nitroaromaten oder Anilinen bzw. durch reduktive Aminierung von 4-alkyl-substituierten Phenolen zugänglich.

(Vgl.: Methoden der Org. Chemie (Houben-Weyl), Bd. 5/1a, 4. Auflage, G. Thieme Verlag, Stuttgart 1970.

Methoden der Org. Chemie (Houben-Weyl), 4/1c, 4. Auflage, G. Thieme Verlag, Stuttgart 1980.

Methoden der Org. Chemie (Houben-Weyl), Bd. 11.1 S. 108 ff., 4. Auflage, G.Thieme Verlag, Stuttgart 1957).

Hierbei erhält man Stereoisomerengemische, die auf bekannte Weise, z.B. durch Destillation getrennt werden können.

Die als Ausgangsstoffe benötigten Verbindungen der Formel $R^2X$, $R^3X$, in denen X für Chlor, Brom und Iod, oder für jeweils gegebenenfalls substituiertes Alkyl- oder Arylsulfonyloxy, insbesondere für Methansulfonyloxy, Trifluormethansulfonyloxy oder p-Toluolsulfonyloxy steht, sind bekannte und vielfach handelsübliche Verbindungen oder sie sind auf bekanntem Weg aus den entsprechenden Alkoholen herstellbar.

Als Verdünnungsmittel zur Durchführung der Alkylierung kommen sowohl protische als auch aprotische Lösungsmittel in Frage.

Hierzu gehören insbesondere Alkohole wie Methanol, Ethanol, Propanol, Butanol, Amylalkohol,

aliphatische oder aromatische, gegebenenfalls halogenierte Kohlenwasserstoffe, wie beispielsweise Benzin, Benzol, Toluol, Xylol, Chlorbenzol, Petrolether, Hexan, Cyclohexan, Dichlormethan, Chloroform, Tetrachlorkohlenstoff, Ether, wie Diethylether, Dioxan, Tetrahydrofuran oder Ethylenglykoldimethyl- oder -diethylether, Ketone, wie Aceton oder Butanol, Nitrile wie Acetonnitril oder Propionitril, Amide, wie Dimethylformamid, Dimethylacetamid, N-Methylformamilid, N-Methylpyrrolidon oder Hexamethylphosphorsäuretriamid, Ester, wie Essigsäureethylester oder Sulfoxide, wie Dimethylsulfoxid. Es kann jedoch auch ohne Verdünnungsmittel gearbeitet werden.

Das erfindungsgemäße Verfahren verläuft in Gegenwart eines Säurebindemittels, also einer anorganischen oder organischen Base. Hierzu gehören beispielsweise Alkalimetallhydroxide, wie Natriumhydroxid oder Kaliumhydroxid; Alkalimetallcarbonate, wie Natriumcarbonat, sowie tertiäre Amine, wie Triethylamin, N,N-Dimethylanilin, Pyridin, N,N-Dimethylaminopyridin, Diazabicycloundecen (DBU).

Ein entsprechender Überschuß des reagierenden Amins kann ebenfalls als Säurebindemittel und, falls das Amin flüssig ist, auch als Verdünnungsmittel dienen.

Die Umsetzungsbedingungen für solche Alkylierungen sind bekannt.

Das gilt auch, wenn zur Durchführung des erfindungsgemäßen Verfahrens als Ausgangsstoffe Aldehyde oder Ketone verwendet werden; auch diese sind i.a. bekannte Verbindungen und vielfach im Handel erhältlich.

Die zur Durchführung der zuletzt angegebenen Verfahrensvariante benötigten Cyclohexylimine bzw. Iminiumsalze lassen sich mit bekannten Methoden aus 4-alkyl-substituierten Cyclohexanonen und Aminen herstellen.

(Vgl.: Methoden der Org. Chemie (Houben-Weyl), Bd. VIII, S. 1945 ff, 4. Aufl. G. Thieme Verlag, Stuttgart 1952.

Methoden der Org. Chemie (Houben-Weyl), Bd. XI/2, S. 77 ff., 4. Auflage, G. Thieme Verlag, Stuttgart 1958.

Methoden der Org. Chemie (Houben-Weyl), Bd. VII 2b, S. 1948 ff., 4. Aufl., G. Thieme Verlag, Stuttgart 1976).

Als Reduktionsmittel bei der Durchführung des erfindungsgemäßen Verfahrens werden komplexe Hydride, vorzugsweise Natriumborhydrid, Natriumcyanborhydrid, Lithiumaluminiumhydrid, Lithium-tri-tert.-butoxy-aluminium-hydrid, Lithium-tri-(2-methyl-but-2-yl)borhydrid verwendet und als Verdünnungsmittel vozugsweise aprotische Lösungsmittel wie Diethylether, Tetrahydrofuran, Dioxan, Ethylenglycoldimethyl- und -diethylether.

Isomerentrennung von cis/trans-4-Tertiärbutylcyclohexylamin

Von 1,5 Litern 4-tert.-Butylcyclohexylamin (Isomerengemisch; trans: cis = 8:2) werden bei atmosphärischem Druck über eine verspiegelte 100 cm lange Kolonne ca. 860 g Isomerengemisch langsam abdestilliert (ca. 10–20 Tropfen/min.; Sdp. 205–208°C). Der verbleibende Sumpf wird mit 10 g pulverisiertem NaOH versetzt und zweimal i. Vak. über eine Brücke destilliert (82°C/11 mbar). Man erhält einen Vorrat von 485 g trans-4-Tertiärbutylcyclohexylamin (95% trans-Isomer lt. GC und NMR-Analyse), der für viele der nachstehend beschriebenen Verbindungen verwendet werden kann.

Beispiel 1

trans-N-(4-Tertiärbutylbenzyl)-4-tert.-butylcyclohexylamin

Zu einer Lösung aus 15,5 g (0,1 mol) trans. -4-tert.-Butylcyclohexylamin in 100 ml abs. Methanol tropft man unter Eiskühlung 15 ml 6,5 n methanolische Salzsäure. Hierzu gibt man 22 g Molekularsieb (3A), 16,2 g (0,1 mol) 4-tert.-Butylbenzaldehyd und portionsweise 3,1 g (50 mmol) Natriumcyanborhydrid und rührt 22 Std. bei Raumtemperatur. Die Mischung wird mit konz. Salzsäure auf pH 0 bis 1 angesäuert und i.V. eingeengt. Der ausfallende Festkörper wird abgesaugt, mit Methyl-tert.-butylether gewaschen und mit 20% Natronlauge und Methyl-tert.-butylether behandelt. Die Mischung wird mit Methyl-tert.-butylether extrahiert. Die vereinigten organischen Extrakte werden mit Wasser gewaschen, über Magnesiumsulfat getrocknet und i.V. eingeengt. Der erhaltene Rückstand wird aus Hexan bei –28°C kristallisiert.

Man erhält 15 g (50% der berechneten Menge) der Titelverbindung.

Auf entsprechende Weise wurden die in der folgender Tabelle 1 aufgeführten trans-4-substituierten Cyclohexylamine sowie die in Tabelle 2 aufgeführten 4-substituierten Cyclohexen-3-yl-amine hergestellt, soweit ihre Eigenschaften (physikalische Daten bzw. Aggregatzustand angegeben sind; die ohne solche Angaben aufgeführten Stoffe können auf entsprechende Weise aus entsprechenden Vorprodukten erhalten werden.

Tabelle 1

Verbindungen der Formel I

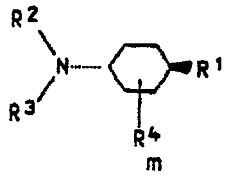

| Verb. Nr. | $R^1$ | $R^2$ | $R^3$ | $R^4$ | Aggregat-zustand, evtl. Sdp. [°C/mbar] Schmp. [°C] |
|---|---|---|---|---|---|
| 3 | tert.-Butyl | n-Butyl | n-Butyl | H | Öl |
| 4 | " | " | 2-Methyl-ethyl | H | Öl |
| 5 | " | " | 1,2-Dimethylpropyl | H | Öl |
| 6 | " | " | 4-Methyl-butyl | H | Öl |
| 7 | " | " | 1,3-Dimethylbutyl | H | Öl |
| 8 | " | 4,4-Dimethyl-pentyl | Methyl | H | Öl |
| 9 | " | " | n-Butyl | H | Öl |
| 10 | " | 1,5-Dimethyl-hexyl | H | H | Öl |
| 11 | " | " | Methyl | H | Öl |
| 12 | " | " | Ethyl | H | |
| 13 | " | " | n-Propyl | H | |
| 14 | " | " | n-Butyl | H | Öl |
| 15 | " | 3,5,5-Trimethyl-hexyl | H | H | Öl |
| 16 | " | " | Methyl | H | |
| 17 | " | " | Ethyl | H | |
| 18 | " | " | 2-Hydroxyethyl | H | |
| 19 | " | " | n-Butyl | H | Öl |

Tabelle 1 (Fortsetzung)

| Verb. Nr. | $R^1$ | $R^2$ | $R^3$ | $R^4$ | Aggregat-zustand, evtl. Sdp. [°C/mbar] Schmp. [°C] |
|---|---|---|---|---|---|
| 20 | tert.Butyl | 1,2,6-Trimethyl-heptyl | H | H | Öl |
| 21 | " | " | Methyl | H | |
| 22 | " | " | Ethyl | H | |
| 23 | " | " | n-Propyl | H | |
| 24 | " | " | n-Butyl | H | Öl |
| 25 | " | n-Octyl | Methyl | H | |
| 26 | " | " | Ethyl | H | |
| 27 | " | " | 2-Methoxyethyl | H | |
| 28 | " | " | n-Butyl | H | Öl |
| 29 | " | 3,7-Dimethyl-octyl | H | H | Öl |
| 30 | " | " | Methyl | H | Öl |
| 31 | " | 3,7-Dimethyl-octyl | Ethyl | H | Öl |
| 32 | " | " | Isopropyl | H | |
| 33 | " | " | n-Butyl | H | Öl |
| 35 | " | " | Ethyl | H | |
| 36 | " | " | 2-Methylpropyl | H | |
| 37 | " | " | 1-Methylpropyl | H | |
| 38 | " | " | n-Butyl | H | |
| 39 | " | 1,5,9-Trimethyl-decyl | H | H | Öl |
| 40 | " | " | Methyl | H | |
| 41 | " | " | Ethyl | H | |
| 42 | " | " | n-Propyl | H | |
| 43 | " | " | n-Butyl | H | Öl |
| 44 | " | 4-tert.-Butyl-benzyl | Methyl | H | 56 - 58 |
| 45 | " | " | Ethyl | H | Öl |
| 46 | " | " | 2-Hydroxyethyl | H | |
| 47 | " | " | n-Butyl | H | Öl |
| 48 | " | " | n-Pentyl | H | |
| 49 | " | " | 1-Methyl-ethyl | H | Öl |
| 50 | " | " | Isobutyl | H | |
| 51 | " | " | 4-Methyl-butyl | H | |
| 52 | " | " | 2-Hydroxy-ethyl | H | |
| 53 | " | | 2-Methoxyethyl | H | |
| 54 | " | 3-(4-tert.-butylphenyl) 2-methyl-propyl | H | H | 72 - 76 |
| 55 | " | 4-Chlorbenzyl | H | H | 53 - 55 |

Tabelle 1 (Fortsetzung)

| Verb. Nr. | $R^1$ | $R^2$ | $R^3$ | $R^4$ | Aggregat-zustand,evtl. Sdp.[°C/mbar] Schmp.[°C] |
|---|---|---|---|---|---|
| 56 | tert.Butyl | 2,4-Dichlorbenzyl | H | H | 68 - 71 |
| 57 | " | 2-Phenoxyethyl | H | H | Öl |
| 58 | " | 2-(2,4-Dichlorphenoxy) -ethyl | H | H | 64 - 68 |
| 59 | " | 9-Methyl-fluoren-9-yl | H | H | Öl |
| 60 | " | 5-(4-Methylphenyl)-pentyl | H | H | 184/0.4 |
| 61 | " | 5-(4-Methoxyphenyl)-pentyl | H | H | 184/0.1 |
| 62 | " | 5-(4-Isopropylphenyl)-pentyl | H | H | Öl |
| 63 | " | 8-(4-Methylpentyl)-octyl | H | H | 215/0.9 |
| 64 | " | 5-(2,4-Dimethylphenyl) -pentyl | H | H | 159/0.1 |
| 65 | " | 3-tert.-Butyl-benzyl | H | H | |
| 66 | " | 4-(2,4-Dichlorphenoxy) -butyl | H | H | |
| 67 | " | 5-(4-Phenylphenyl)-pentyl | H | H | |
| 68 | " | 5-(2-Chlor-4-Phenyl-phenyl)-pentyl | H | H | |
| 69 | " | 5-(2,4,6-Trimethyl-phenyl)-pentyl | H | H | |
| 70 | " | 5-(2,4-Dichlorphenyl) -pentyl | H | H | |
| 71 | Isopropyl | 5-(4-Methylphenyl)-pentyl | H | H | 166/0.1 |
| 72 | 2-Hydroxy-1,1-di-methyl-ethyl | 4-tert.-Butyl-benzyl | 3-Methoxy-propyl | H | |
| 73 | 1,1,3,3-Tetra-methyl-butyl | 4-tert.-Butyl-benzyl | H | H | 150 - 152 |
| 74 | " | " | 4-tert.-Butyl-benzyl | H | 231 - 234 |
| 75 | " | " | $-CH_3$ | H | |

Tabelle 1 (Fortsetzung)

| Verb. Nr. | $R^1$ | $R^2$ | $R^3$ | $R^4$ | Aggregatzustand, evtl. Sdp. [°C/mbar] Schmp. [°C] |
|---|---|---|---|---|---|
| 76 | tert.-Butyl | 3-(2-Naphthyl)-2-methyl-propyl | H | H | 190/0.3 |
| 77 | " | (4-Methyl-cyclohexyl)-methyl | H | H | |
| 78 | " | 4-Isopropylbenzyl | H | H | |
| 79 | " | (trans-4-tert.-Butyl-cyclohexyl)-methyl | H | H | 66 - 68 |
| 80 | " | 1-(trans-4-tert.-Butyl-cyclohexyl)-ethyl | H | H | |
| 81 | " | (cis-4-tert.-Butyl-cyclohexyl)-methyl | H | H | 72 - 74 |
| 82 | " | 1-(cis-4-tert.-Butyl-cyclohexyl)-ethyl | H | H | |
| 83 | " | 1-(4-tert.-Butylphenyl)-ethyl | H | H | 67 - 69 |
| 84 | " | 4-tert.-Amylbenzyl | H | H | Öl |
| 85 | " | 4-sec.-Butylbenzyl | H | H | |
| 86 | " | 4-(1,2-Dimethylpropyl)-benzyl | H | H | |
| 87 | " | 4-tert.-Butoxy-benzyl | H | H | 160/0.3 |
| 88 | " | 4-(1,1,3,3-Tetramethyl-butyl)benzyl | H | H | |
| 89 | " | 4-Butylbenzyl | H | H | |
| 90 | " | 4-Butoxyl-benzyl | H | H | 172/0.2 |
| 91 | tert.-Butyl | (4-Methyl-cyclohexyl)-methyl | $-CH_3$ | | |
| 92 | " | 4-Isopropylbenzyl | $-CH_3$ | H | |
| 93 | " | (trans-4-tert.-Butyl-cyclohexyl)-methyl | $-CH_3$ | H | |
| 94 | " | 1-(trans-4-tert.-Butyl-cyclohexyl)-ethyl | $-CH_3$ | H | |
| 95 | " | (cis-4-tert.-Butyl-cyclohexyl)-methyl | $-CH_3$ | H | |
| 96 | " | 1-(cis-4-tert.-Butyl-cyclohexyl)-ethyl | $-CH_3$ | H | |

Tabelle 1 (Fortsetzung)

| Verb. Nr. | $R^1$ | $R^2$ | $R^3$ | $R^4$ | Aggregatzustand, evtl. Sdp.[°C/mbar] Schmp.[°C] |
|---|---|---|---|---|---|
| 97 | tert.-Butyl | 1-(4-tert.Butyl--phenyl)-ethyl | $-CH_3$ | H | |
| 98 | " | 4-tert.-Amylbenzyl | $-CH_3$ | H | |
| 99 | " | 4-sec.-Butylbenzyl | $-CH_3$ | H | |
| 100 | tert.-Butyl | 4-(1,2-Dimethyl-propyl)-benzyl | $-CH_3$ | H | |
| 101 | " | 4-tert.-Butoxy-benzyl | $-CH_3$ | H | |
| 102 | " | 4-(1,1,3,3-Tetra-methylbutyl)-benzyl | $-CH_3$ | H | |
| 103 | " | 4-Butyl-benzyl | $-CH_3$ | H | |
| 104 | " | 4-Butoxy-benzyl | $-CH_3$ | H | 46 - 48 |
| 105 | tert.-Butyl | (4-Methyl-cyclohexyl)-methyl | 2-Hydroxyethyl | H | |
| 106 | " | 4-Isopropylbenzyl | " | H | |
| 107 | " | (trans-4-tert.-Butyl-cyclohexyl)-methyl | " | H | |
| 108 | " | 1-(trans-4-tert.-Butyl-cyclohexyl)-ethyl | " | H | |
| 109 | " | (cis-4-tert.-Butyl-cyclohexyl)-methyl | " | H | |
| 110 | " | 1-(cis-4-tert.-Butyl-cyclohexyl)-ethyl | " | H | |
| 111 | " | 1-(4-tert.Butyl--phenyl)-ethyl | " | H | |
| 112 | " | 4-tert.-Amylbenzyl | " | H | |
| 113 | " | 4-sec.-Butylbenzyl | " | H | |
| 114 | " | 4-(1,2-Dimethyl-propyl)-benzyl | " | H | |
| 115 | " | 4-tert.-Butoxy-benzyl | " | H | |
| 116 | " | 4-(1,1,3,3-Tetra-methylbutyl)-benzyl | " | H | |
| 117 | " | 4-Butyl-benzyl | " | H | |
| 118 | " | 4-Butoxy-benzyl | " | H | |

Tabelle 1 (Fortsetzung)

| Verb. Nr. | $R^1$ | $R^2$ | $R^3$ | $R^4$ | Aggregatzustand, evtl. Sdp. [°C/mbar] Schmp. [°C] |
|---|---|---|---|---|---|
| 119 | tert.-Butyl | (4-Methyl-cyclohexyl)-methyl | 2-Methoxyethyl | H | |
| 120 | " | 4-Isopropylbenzyl | " | H | |
| 121 | " | (trans-4-tert.-Butyl-cyclohexyl)-methyl | " | H | |
| 122 | " | 1-(trans-4-tert.-Butyl-cyclohexyl)-ethyl | " | H | |
| 123 | " | (cis-4-tert.-Butyl-cyclohexyl)-methyl | " | H | |
| 124 | " | 1-(cis-4-tert.-Butyl-cyclohexyl)-ethyl | " | H | |
| 125 | " | 1-(4-tert.Butyl-phenyl)-ethyl | " | H | |
| 126 | " | 4-tert.-Amylbenzyl | " | H | |
| 127 | " | 4-sec.-Butylbenzyl | " | H | |
| 128 | " | 4-(1,2-Dimethyl-propyl)-benzyl | " | H | |
| 129 | " | 4-tert.-Butoxy-benzyl | " | H | |
| 130 | " | 4-(1,1,3,3-Tetra-methylbutyl)-benzyl | " | H | |
| 131 | " | 4-Butyl-benzyl | " | H | |
| 132 | " | 4-Butoxy-benzyl | " | H | |
| 133 | tert.-Butyl | (4-Methyl-cyclohexyl)-methyl | H | 3-$(CH_3)_2$ | |
| 134 | " | 4-Isopropylbenzyl | H | " | |
| 135 | " | (trans-4-tert.-Butyl-cyclohexyl)-methyl | H | " | |
| 136 | " | 1-(trans-4-tert.-Butyl-cyclohexyl)-ethyl | H | " | |
| 137 | " | (cis-4-tert.-Butyl-cyclohexyl)-methyl | H | " | |

Tabelle 1 (Fortsetzung)

| Verb. Nr. | $R^1$ | $R^2$ | $R^3$ | $R^4$ | Aggregatzustand, evtl. Sdp. [°C/mbar] Schmp. [°C] |
|---|---|---|---|---|---|
| 138 | tert.-Butyl | 1-(cis-4-tert.-Butyl-cyclohexyl)-ethyl | H | 3-$(CH_3)_2$ | |
| 139 | " | 1-(4-tert.Butyl--phenyl)-ethyl | H | " | |
| 140 | " | 4-tert.-Amylbenzyl | H | " | |
| 141 | " | 4-sec.-Butylbenzyl | H | " | |
| 142 | " | 4-(1,2-Dimethyl-propyl)-benzyl | H | " | |
| 143 | " | 4-tert.-Butoxy-benzyl | H | " | |
| 144 | " | 4-(1,1,3,3-Tetra-methylbutyl)-benzyl | H | " | |
| 145 | " | 4-Butyl-benzyl | H | " | |
| 146 | " | 4-Butoxy-benzyl | H | " | |
| 147 | tert.-Amyl | (4-Methyl-cyclohexyl)-methyl | H | H | |
| 148 | " | 4-Isopropylbenzyl | $CH_3$ | H | |
| 149 | " | (trans-4-tert.-Butyl-cyclohexyl)-methyl | 2-Hydroxyethyl | H | |
| 150 | " | 1-(trans-4-tert.-Butyl-cyclohexyl)-ethyl | 2-Ethoxyethyl | H | |
| 151 | " | (cis-4-tert.-Butyl-cyclohexyl)-methyl | H | 3-$(CH_3)_2$ | |
| 152 | " | 1-(cis-4-tert.-Butyl-cyclohexyl)-ethyl | H | H | |
| 153 | " | 1-(4-tert.Butyl--phenyl)-ethyl | H | H | |
| 154 | " | 4-tert.-Amylbenzyl | Ethyl | H | |
| 155 | " | 4-sec.-Butylbenzyl | n-Butyl | H | |
| 156 | " | 4-(1,2-Dimethyl-propyl)-benzyl | H | H | |
| 157 | " | 4-tert.-Butoxy-benzyl | H | H | |
| 158 | " | 4-(1,1,3,3-Tetra-methylbutyl)-benzyl | H | H | |

Tabelle 1 (Fortsetzung)

| Verb. Nr. | $R^1$ | $R^2$ | $R^3$ | $R^4$ | Aggregat-zustand, evt Sdp.[°C/mba Schmp.[°C] |
|---|---|---|---|---|---|
| 159 | tert.-Amyl | 4-Butyl-benzyl | H | H | |
| 160 | " | 4-Butoxy-benzyl | H | H | |
| 161 | 1,1,3,3-Tetra methyl-butyl | (4-Methyl-cyclohexyl) -methyl | H | H | |
| 162 | " | 4-Isopropylbenzyl | H | H | |
| 163 | " | (trans-4-tert.-Butyl -cyclohexyl)-methyl | H | H | |
| 164 | " | 1-(trans-4-tert.-Butyl-cyclohexyl)-ethyl | H | H | |
| 165 | " | (cis-4-tert.-Butyl-cyclohexyl)-methyl | H | H | |
| 166 | " | 1-(cis-4-tert.-Butyl-cyclohexyl)-ethyl | H | H | |
| 167 | " | 1-(4-tert.Butyl--phenyl)-ethyl | H | H | |
| 168 | " | 4-tert.-Amylbenzyl | H | H | |
| 169 | " | 4-sec.-Butylbenzyl | H | H | |
| 170 | " | 4-(1,2-Dimethyl-propyl)-benzyl | H | H | |
| 171 | " | 4-tert.-Butoxy-benzyl | H | H | |
| 172 | " | 4-(1,1,3,3-Tetra-methylbutyl)-benzyl | H | H | |
| 173 | " | 4-Butyl-benzyl | H | H | |
| 174 | " | 4-Butoxy-benzyl | H | H | |

Tabelle 1 (Fortsetzung)

| Verb. Nr. | $R^1$ | $R^2$ | $R^3$ | $R^4$ | Aggregatzustand, evtl. Sdp. [°C/mbar] Schmp. [°C] |
|---|---|---|---|---|---|
| 175 | 1-Methoxy-1-methyl-ethyl | (4-Methyl-cyclohexyl)-methyl | H | H | |
| 176 | " | 4-Isopropylbenzyl | H | H | |
| 177 | " | (trans-4-tert.-Butyl-cyclohexyl)-methyl | H | H | |
| 178 | " | 1-(trans-4-tert.-Butyl-cyclohexyl)-ethyl | H | H | |
| 179 | " | (cis-4-tert.-Butyl-cyclohexyl)-methyl | H | H | |
| 180 | " | 1-(cis-4-tert.-Butyl-cyclohexyl)-ethyl | H | H | |
| 181 | " | 1-(4-tert.Butyl--phenyl)-ethyl | H | H | |
| 182 | " | 4-tert.-Amylbenzyl | H | H | |
| 183 | " | 4-sec.-Butylbenzyl | H | H | |
| 184 | " | 4-(1,2-Dimethyl-propyl)-benzyl | H | H | |
| 185 | " | 4-tert.-Butoxy-benzyl | H | H | |
| 186 | " | 4-(1,1,3,3-Tetra-methylbutyl)-benzyl | H | H | |
| 187 | " | 4-Butyl-benzyl | H | H | |
| 188 | " | 4-Butoxy-benzyl | H | H | |
| 189 | tert.-Amyl | 4-tert.-Butylbenzyl | H | H | |
| 190 | Isopropyl | " | H | H | |
| 191 | Cyclohexyl | " | H | H | 68 - 70 |
| 192 | 1,1,3,3-Tetra-methyl-butyl | " | 2-Hydroxyethyl | H | |
| 193 | 1-Methoxy-1-methyl-ethyl | " | H | H | |
| 194 | 2-Hydroxy-1,1 dimethyl-ethyl | " | H | H | |
| 195 | 1,1-Dimethyl-butyl | " | H | H | |

Tabelle 1 (Fortsetzung)

| Verb. Nr. | $R^1$ | $R^2$ | $R^3$ | $R^4$ | Aggregatzustand, evtl. Sdp. [°C/mbar] Schmp. [°C] |
|---|---|---|---|---|---|
| 196 | tert. Butyl | H | 2-Methyl-4-tert.-butyl-benzyl | H | 54 - 58 |
| 197 | tert.-Amyl | H | " | H | |
| 198 | Isopropyl | H | " | H | |
| 199 | Cyclohexyl | H | " | H | |
| 200 | 1,1,3,3-Tetra-methyl-butyl | H | " | H | |
| 201 | 1-Methoxy-1-methyl-ethyl | H | " | H | |
| 202 | 2-Hydroxy-1,1-dimethyl-ethyl | H | " | H | |
| 203 | 1,1-Dimethyl-butyl | H | " | H | |
| 204 | tert.-Butyl | H | 4-(1-Methoxy-1-methyl-ethyl)-benzyl | H | 47 - 49 |
| 205 | tert.-Amyl | H | " | H | |
| 206 | Isopropyl | H | " | H | |
| 207 | Ccyclohexyl | H | " | H | |
| 208 | 1,1,3,3-Tetra-methyl-butyl | H | " | H | |
| 209 | 1-Methoxy-1-methyl-ethyl | H | " | H | |
| 210 | 2-Hydroxy-1,1-dimethyl-ethyl | H | 4-(1-Methoxy-1-methyl-ethyl)-benzyl | H | |
| 211 | 1,1-Dimethyl-butyl | H | H | H | |
| 212 | tert.-Butyl | 2-Cl-4-tert-Butyl-benzyl | H | H | |
| 213 | tert.-Amyl | " | H | H | |
| 214 | Isopropyl | " | H | H | |
| 215 | Cyclohexyl | " | H | H | |
| 216 | 1,1,3,3-Tetra- | " | H | H | |
| | methyl-butyl | " | H | H | |

Tabelle 1 (Fortsetzung)

| Verb. Nr. | $R^1$ | $R^2$ | $R^3$ | $R^4$ | Aggregatzustand, evtl Sdp. [°C/mbar Schmp. [°C] |
|---|---|---|---|---|---|
| 217 | 1-Methoxy-1-methyl-ethyl | 2-Cl-4-tert.-Butyl-benzyl | H | H | |
| 218 | 2-Hydroxy-1,1-dimethyl-ethyl | " | H | H | |
| 219 | 1,1-Dimethyl-butyl | " | H | H | |
| 220 | tert.-Butyl | 2-(4-tert.-Butyl-phenyl)-ethyl | H | H | Öl |
| 221 | tert.-Amyl | " | H | H | |
| 222 | Isopropyl | " | H | H | |
| 223 | Cyclohexyl | " | H | H | |
| 224 | 1,1,3,3-Tetra-methyl-ethyl | " | H | H | |
| 225 | 1-Methoxy-1,1-dimethyl-ethyl | " | H | H | |
| 226 | 2-Hydroxy-1,1-dimethyl-ethyl | " | H | H | |
| 227 | 1,1-Dimethyl-butyl | " | H | H | |
| 254 | tert.-Butyl | 4-(2-Propenyl)-Benzyl | H | H | Öl |
| 255 | " | 4-(1-Hydroxy-1,1-di-methylethyl)-benzyl | H | H | Öl |
| 256 | " | 4-Methoxy-3-tert.-butyl-benzyl | H | H | 40 - 42 |
| 257 | " | trans-4-tert.-Butyl-cyclohexyl | H | H | 70 - 72 |
| 258 | " | cis-4-tert.-Butyl-cyclohexyl | H | H | 46 - 48 |
| 259 | " | 2-(2-Fluorphenoxy)-ethyl | H | H | Öl |
| 260 | " | 2-(2-Chlorphenyl)-ethyl | H | H | Öl |
| 261 | " | 2-(2,3-Dichlorphenyl)-ethyl | H | H | Öl |
| 262 | " | 2-(3-Trifluormethyl-phenyl)-ethyl | H | H | Öl |
| 263 | " | 2-(3-tert.-Butyl-phenyl)-ethyl | H | H | Öl |

Tabelle 1 (Fortsetzung)

| Verb. Nr. | $R^1$ | $R^2$ | $R^3$ | $R^4$ | Aggregat-zustand, evtl. Sdp. [°C/mbar] Schmp. [°C] |
|---|---|---|---|---|---|
| 264 | tert.-Butyl | 3-tert.-Butylbenzyl | H | H | Öl |
| 265 | 1,1,3,3-Tetra-methylbutyl | 1-Butyl | 1-Butyl | H | 150/0.5 |
| 266 | (1-Cyclohexyl--1-methyl)-ethyl | 4-tert.-Butylbenzyl | H | H | 208-212/0.4 |
| 267 | tert.-Butyl | 1-Naphthylmethyl | H | H | 175/0.2 |
| 268 | " | 4-Trifluormethyl-benzyl | H | H | 127/0.2 |
| 269 | " | 2-Brombenzyl | H | H | 146/0.2 |
| 270 | " | Cyclopropyl | H | H | Öl |
| 271 | " | 4-tert.-Butylbenzyl | Cyclo-propyl | H | Öl |
| 272 | " | 2-Naphthylmethyl | H | H | Öl |
| 273 | " | 3-Brombenzyl | H | H | 175/0.9 |
| 274 | " | 4-Brombenzyl | H | H | 160/0.5 |
| 275 | " | 3-(2-Chlorphenyl)-2-phenyl-2-propenyl | H | H | Öl |
| 276 | " | 2-Brombenzyl | Methyl | H | Öl |
| 277 | " | 2-Trifluormethylbenzyl | H | H | 138/0.8 |
| 278 | " | 3-Brombenzyl | Methyl | H | Öl |
| 279 | " | 4-Brombenzyl | Methyl | H | Öl |
| 280 | " | n-Dodecyl | H | H | 156/0.2 |
| 281 | " | Pentafluorbenzyl | H | H | 115/0.2 |
| 282 | " | 2,4,6-Trimethylbenzyl | H | H | 178/0.2 |
| 283 | " | 4-n-Dodecyl-benzyl | H | H | Öl |
| 284 | " | 1-(4-Chlorphenyl)-cyclohexyl-1-methyl | H | H | Harz |
| 285 | " | 1-(4-Chlorphenyl)-cyclohexyl-1-methyl | Methyl | H | Öl |
| 286 | " | 4-tert.-Butylbenzyl | Propargyl | H | Öl |
| 287 | " | 5-(3,4-Dimethyl-phenyl)-pentyl | H | H | 159/0.4 |

Tabelle 2

Verbindungen der Formel

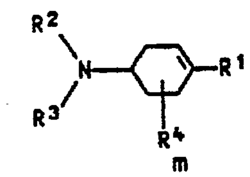

| Verb. Nr. | $R^1$ | $R^2$ | $R^3$ | $R^4$ | Aggregatzustand, evtl. Sdp. [°C/mbar] Schmp. [°C] |
|---|---|---|---|---|---|
| 228 | tert.-Butyl | (4-Methyl-cyclohexyl) methyl | Ethyl | H | |
| 229 | " | 4-Isopropylbenzyl | Methyl | H | |
| 230 | " | (trans-4-tert.-Butyl -cyclohexyl)-methyl | H | H | |
| 231 | " | 1-(trans-4-tert.-Butyl-cyclohexyl)-ethyl | H | H | |
| 232 | " | (cis-4-tert.-Butyl-cyclohexyl)-methyl | 2-Hydroxyethyl | H | |
| 233 | " | 1-(cis-4-tert.-Butyl-cyclohexyl)-ethyl | H | H | |
| 234 | " | 1-(4-tert.Butyl--phenyl)-ethyl | H | H | |
| 235 | " | 4-tert.-Amylbenzyl | H | H | |
| 236 | tert.-Butyl | 4-sec.-Butylbenzyl | H | 5-$(CH_3)_2$ | |
| 237 | " | 4-(1,2-Dimethyl-propyl)-benzyl | H | H | |
| 238 | " | 4-tert.-Butoxy-benzyl | H | H | |
| 239 | " | 4-(1,1,3,3-Tetramethyl butyl)-benzyl | 2-Methoxyethyl | H | |
| 240 | " | 4-Butyl-benzyl | H | H | |
| 241 | " | 4-Butoxy-benzyl | H | H | |
| 242 | tert.-Butyl | 4-tert.-Butyl-benzyl | H | H | |
| 243 | " | 2-Methyl-4-tert.-butyl-benzyl | H | H | |
| 244 | " | 4-(1-Methoxy-1-methyl-ethyl)-benzyl | H | H | |
| 245 | " | 2-Cl-4-tert.-butyl-benzyl | H | H | |

Tabelle 2 (Fortsetzung)

| Verb. Nr. | $R^1$ | $R^2$ | $R^3$ | $R^4$ | Aggregatzustand, evtl. Sdp.[°C/mbar] Schmp.[°C] |
|---|---|---|---|---|---|
| 246 | " | 2-(4-tert.-Butyl-phenyl)-ethyl | H | H | |
| 247 | tert.-Amyl | 4-tert.-Butylbenzyl | H | H | |
| 248 | Isopropyl | " | H | H | |
| 249 | Cyclohexyl | " | H | H | |
| 250 | 1,1,3,3-Tetramethyl-butyl | " | H | H | |
| 251 | 1-Methoxy-1-methyl-ethyl | " | H | H | |
| 252 | 2-Hydroxy-1,1-dimethyl-ethyl | " | H | H | |
| 253 | 1,1-Dimethyl-butyl | " | H | H | |

Wirkungsbeispiele

Als Vergleichswirkstoff (A) wurde N-Benzyl-trans-4-tert.-butylcyclohexylamin benutzt – bekannt aus J. Org. Chem. 48, 3412 (1983).

Beispiel 1

Wirksamkeit gegen Weizenmehltau

Blätter von in Töpfen gewachsenen Weizenkeimlingen der Sorte "Frühgold" wurden mit wäßriger Spritzbrühe, die 80% Wirkstoff und 20% Emulgiermittel in der Trockensubstanz enthielt, besprüht und 24 Stunden nach dem Antrocknen des Spritzbelages mit Oidien (Sporen) des Weizenmehltaus (Erysiphe graminis var. tritici) bestäubt. Die Versuchspflanzen wurden anschließend im Gewächshaus bei Temperaturen zwischen 20 und 22°C und 75 bis 80% relativer Luftfeuchtigkeit aufgestellt. Nach 7 Tagen wurde das Ausmaß der Mehltauentwicklung ermittelt.

Bei diesem Versuch war mit 0,025%iger Wirkstoffzubereitung der Verbindungen 1, 15, 16, 28, 30, 33, 44, 47, 53, 54, 60, 61, 62, 64, 79, 81, 83, 84, 87, 90, 191, 196, 204, 220, 254, 268, 271, 274, 279, 280, 282, 286 und 287 die Schadpilzentwicklung weitgehend zu verhindern, während Vergleichswirkstoff A starken Befall bei mittlerem Blattschaden nicht verhinderte (unbehandelt Totalbefall).

Beispiel 2

Wirksamkeit gegen Gurkenmehltau

Blätter von in Töpfen gewachsenen Gurkenkeimlingen der Sorte "Chinesische Schlange" wurden im Zweiblattstadium mit einer wäßrigen Konidiensuspension des Gurkenmehltaus besprüht. Nach einem Tag wurden diese Pflanzen mit wäßriger Spritzbrühe, die 80% Wirkstoff und 20% Emulgiermittel in der Trockensubstanz enthielt, bis zur Tropfnässe besprüht und im Gewächshaus bei Temperaturen zwischen 20 und 22°C und 70 bis 80% Luftfeuchtigkeit aufgestellt. 21 Tage nach der Inoculation wurde das Ausmaß des Pilzbefalles ermittelt.

Bei diesem Versuch war der Befall der Blätter nach Behandlung mit 0,025%iger Wirkstoffzubereitung

der Verbindungen 1, 20, 29, 30, 44, 47, 51, 54, 55, 56, 57, 73, 79, 81, 83, 84, 87, 191, 196, 220, 254, 258, 259, 260, 262, 271, 272, 273, 274 and 279 gering, während der Vergleichswirkstoff A starken Befall bei beginnendem Blattschaden nicht verhinderte (unbehandelt Totalbefall).

Beispiel 3

Wirksamkeit gegen Weizenbraunrost

Blätter von in Töpfen gewachsenen Weizensämlingen der Sorte "Frühgold" wurden mit Sporen des Braunrostes (Puccinia recondita) bestäubt. Danach wurden die Töpfe für 24 Stunden bei 20 bis 22°C in eine Kammer mit hoher Luftfeuchtigkeit (90 bis 95%) gestellt. Während dieser Zeit keimten die Sporen aus und die Keimschläuche drangen in das Blattgewebe ein. Die infizierten Pflanzen wurden anschließend mit wäßrigen Spritzbrühen, die 80% Wirkstoff und 20% Emulgiermittel in der Trockensubstanz enthielten, tropfnaß gespritzt. Nach dem Antrocknen des Spritzbelages wurden die Versuchspflanzen im Gewächshaus bei Temperaturen zwischen 20 und 22°C und 65 bis 70% relativer Luftfeuchte aufgestellt. Nach 8 Tagen wurde das Ausmaß der Rostpilzentwicklung auf den Blättern ermittelt.

Bei diesem Versuch war der Befall der Blätter nach Behandlung mit 0,025%iger Wirkstoffzubereitung bei den erfindungsgemäßen Verbindungen 1, 8, 11, 14, 15, 16, 20, 21, 29, 30, 33, 44, 47, 49, 51, 53, 54, 56, 74, 79, 81, 83, 84, 87, 191, 196, 204, 220, 254, 255, 258, 263, 264, 271, 279 and 282 gering, während beim Vergleichswirkstoff A mäßiger Befall auftrat (unbehandelt Totalbefall).

Beispiel 4

Wirksamkeit gegen Botrytis cinerea an Paprika

Paprikasämlinge der Sorte "Neusiedler Ideal Elite" wurden, nachdem sich 4–5 Blätter gut entwickelt hatten, mit wäßrigen Suspensionen, die 80% Wirkstoff und 20% Emulgiermittel in der Trockensubstanz enthielten, tropfnaß gespritzt. Nach dem Antrocknen des Spritzbelages wurden die Pflanzen mit einer Konidienaufschwemmung des Pilzes Botrytis cinerea besprüht und bei 22 bis 24°C in eine Kammer mit hoher Luftfeuchtigkeit gestellt. Nach 5 Tagen hatte sich die Krankheit auf den unbehandelten Kontrollpflanzen so stark entwickelt, daß die entstandenen Blattnekrosen den überwiegenden Teil der Blätter bedeckten.

Bei diesem Versuch war der Befall der Blätter nach Behandlung mit 0,05%iger Wirkstoffzubereitung bei den erfindungsgemäßen Verbindungen 1, 19, 44, 47, 54, 73, 79, 81, 83, 87, 191, 196, 204, 222, 254, 256, 257, 261, 262, 263, 267, 270, 272, 275, 284, 285 and 286 gering, während beim Vergleichswirkstoff und bei unbehandelten Pflanzen Totalbefall auftrat.

Beispiel 5

Wirksamkeit gegen Septoria nodorum

Blätter von in Töpfen gewachsenen Weizenkeimlingen der Sorte "Jubilar" wurden mit wäßriger Spritzbrühe, die 80% Wirkstoff und 20% Emulgiermittel in der Trockensubstanz enthielt, bis zur Tropfnässe besprüht. Am folgenden Tag wurden die angetrockneten Pflanzen mit einer wäßrigen Sporensuspension von Septoria nodorum infiziert und dann für 7 Tage bei 17 bis 19°C und 95% relativer Luftfeuchtigkeit weiter kultiviert. Das Ausmaß des Pilzbefalls wurde dann visuell ermittelt.

Bei diesem Versuch war der Befall der Blätter nach Behandlung mit 0,05%iger Wirkstoffzubereitung bei den erfindungsgemäßen Verbindungen 1, 10, 15, 20, 29, 39, 61, 73 gering, während beim Vergleichswirkstoff und bei unbehandelten Pflanzen starker Befall auftrat.

Beispiel 6

Wirksamkeit gegenüber den Pilzen Paecilomyces varioti, Aureobasidium pullulans, Geotrichum candidans

Zur Prüfung der Wirksamkeit gegenüber Pilzen wurden die Wirkstoff einer für das Wachstum der Pilze Paecilomyces variotii, Aureobasidium pullulans und Geotrichum candidans optimal geeigneten Nährlösung in Mengen von 100, 50, 25, 12, 6, 3 und 1,5 Gewichtsteilen pro Million Teile Nährlösung zugesetzt. Jeweils 10 ml Nährlösungs-Wirkstoffgemisch wurden in sterile Reagenzgläser gegeben und mit einem Tropfen einer Sporensuspension beimpft, die $10^6$ Konidien bzw. Zellen enthielten. Nach 120-stündiger Bebrütung wurden aus denjenigen Röhrchen, die kein sichtbares Pilzwachstum zeigten, Proben entnommen und auf Pilznährböden übertragen. In der Tabelle wird die Verdünnungsstufe angegeben, bei welcher nach dem Übertragen einer Probe auf den Nährboden kein Wachstum der Pilze mehr erfolgt.

| Wirkstoff | Wirkstoffmenge in ..ppm, die fungizid wirksam ist | | |
|---|---|---|---|
| | Paecilomyces variotii | Aureobasidium pullulans | Geotrichum candidans |
| 1 | – | 6 | 6 |
| 29 | 3 | 3 | 3 |
| 39 | 6 | 1 | 1 |

Die neuen Verbindungen zeichnen sich, allgemein ausgedrückt, durch eine hervorragende Wirksamkeit gegen ein breites Spektrum von pflanzenpathogenen Pilzen, insbesondere aus der Klasse der Ascomyceten und Basidiomyceten, aus. Sie sind zum Teil systemisch wirksam und können als Blatt- und Bodenfungizide eingesetzt werden.

Besonders interessant sind die fungiziden Verbindungen für die Bekämpfung einer Vielzahl von Pilzen an verschiedenen Kulturpflanzen oder ihren Samen, insbesondere Weizen, Roggen, Gerste, Hafer, Reis, Mais, Rasen, Baumwolle, Soja, Kaffee, Zuckerrohr, Obst und Zierpflanzen im Gartenbau, Weinbau sowie Gemüse – wie Gurken, Bohnen und Kürbisgewächse –.

Die neuen Verbindungen sind insbesondere geeignet zur Bekämpfung folgender Pflanzenkrankheiten:

Erysiphe graminis (echter Mehltau) in Getreide,
Erysiphe cichoracearum und Sphaerotheca fuliginea an Kürbisgewächsen,
Podosphaera leucotricha an Äpfeln,
Uncinula necator an Reben,
Puccinia-Arten an Getreide,
Rhizoctonia-Arten an Baumwolle,
Ustilago-Arten an Getreide und Zuckerrohr,
Venturia inaequalis (Schorf) an Äpfeln,
Septoria nodorum an Weizen,
Botrytis cinerea (Grauschimmel) an Erdbeern, Reben,
Cercospra arachidicola an Erdnüssen,
Pseudocercosporella herpotrichoides an Weizen, Gerste,
Pyricularia oryzae an Reis,
Phytophthora infestans an Kartoffeln und Tomaten,
Plasmopara viticola an Reben sowie
Fusarium- und Verticillium-Arten an verschiedenen Pflanzen.

Die Verbindungen werden angewendet, indem man die Pflanzen mit den Wirkstoffen besprüht oder bestäubt oder die Samen der Pflanzen mit den Wirkstoffen behandelt. Die Anwendung erfolgt vor oder nach der Infektion der Pflanzen oder Samen durch die Pilze.

Die neuen Substanzen können in die üblichen Formulierungen übergeführt werden, wie Lösungen, Emulsionen, Suspensionen, Stäube, Pulver, Pasten und Granulate. Die Anwendungsformen richten sich ganz nach den Verwendungszwecken; sie sollen in jedem Fall eine feine und geleichmäßige Verteilung der wirksamen Substanz gewährleisten. Die Formulierungen werden in bekannter Weise hergestellt, z.B. durch Verstrecken des Wirkstoffs mit Lösungsmitteln und/oder Trägerstoffen, gegebenenfalls unter Verwendung von Emulgiermitteln und Dispergiermitteln, wobei im Falle der Benutzung von Wasser als Verdünnungsmittel auch andere organische Lösungsmittel als Hilfslösungsmittel verwendet werden können. Als Hilfsstoffe kommen dafür im wesentlichen in Frage: Lösungsmittel wie Aromaten (z.B. Xylol, chlorierte Aromaten (z.B. Chlorbenzole), Paraffine (z.B. Erdölfraktionen), Alkohole (z.B. Methanol, Butanol), Ketone (z.B. Cyclohexanon), Amine (z.B. Ethanolamin, Dimethylformamid) und Wasser; Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel, wie nichtionogene und anionische Emulgatoren (z.B. Polyoxyethylen-Fettalkohol-Ether, Alkylsulfonate und Arylsulfonate) und Dispergiermittel, wie Lignin, Sulfitablaugen und Methylcellulose.

Die fungiziden Mittel enthalten im allgemeinen zwischen 0,1 und 95, vorzugsweise zwischen 0.5 und 90 Gew.% Wirkstoff.

Die Aufwandmengen liegen je nach Art des gewünschten Effektes zwischen 0,02 und 3 kg Wirkstoff oder mehr je ha. Die neuen Verbindungen können auch im Materialschutz eingesetzt werden zum Beispiel gegen Paecilomyces variotii. Bei der Anwendung der Wirkstoffe im Materialschutz u.a. zur Bekämpfung holzzerstörender Pilze wie Coniophora puteana und Polystictus versicolor eingesetzt werden. Die neuen Wirkstoffe können auch als fungizid wirksame Bestandteile öliger Holzschutzmittel zum Schutz von Holz gegen holzverfärbende Pilze, wie Aureobasidium pullulans, eingesetzt werden. Die Anwendung erfolgt in der Weise, daß man das Holz mit diesen Mitteln behandelt, beispielsweise tränkt oder anstreicht.

Die Mittel bzw. die daraus hergestellten gebrauchsfertigen Zubereitungen, wie Lösungen, Emulsionen, Suspensionen, Pulver, Stäube, Pasten oder Granulate werden in bekannter Weise angewendet, beispielsweise durch Versprühen, Vernebeln, Verstäuben, Verstreuen, Beizen oder Gießen.

Beispiel für solche Zubereitungen sind:

I. Man vermischt 90 Gew.-Teile der Verbindung Nr. 1 mit 10 Gew.-Teilen N-Methyl-α-pyrrolidon und erhält eine Lösung, die zur Anwendung in Form kleinster Tropfen geeignet ist.

III. 20 Gew.-Teile der Verbindung Nr. 15 werden in einer Mischung gelöst, die aus 40 Gew.-Teilen Cyclohexanon, 30 Gew.-Teilen Isobutanol, 20 Gew.-Teilen des Anlagerungsproduktes von 40 Mol Ethylenoxid an 1 Mol Ricinusöl besteht. Durch Eingießen und feines Verteilen der Lösung in Wasser erhält man eine wäßrige Dispersion.

IV. 20 Gew.-Teile der Verbindung Nr. 16 werden in einer Mischung gelöst, die aus 25 Gew.-Teilen Cyclohexanol, 65 Gew.-Teilen einer Mineralölfraktion vom Siedepunkt 210 bis 280°C und 10 Gew.-Teilen des Anlagerungsproduktes von 40 Mol Ethylenoxid an 1 Mol Ricinusöl besteht. Durch Eingießen und feines Verteilen der Lösung in Wasser erhält man eine wäßrige Dispersion.

V. 80 Gew.-Teile der Verbindung Nr. 28 werden mit 3 Gew.-Teilen des Natriumsalzes der Diisobutylnaphthalin-a-sulfonsäure, 10 Gew.-Teilen des Natriumsalzes einer Ligninsulfonsäure aus einer Sulfitablauge und 7 Gew.-Teilen pulverförmigem Kieselsäuregel gut vermischt und in einer Hammermühle vermahlen. Durch feines Verteilen der Mischung in Wasser erhält man eine Spritzbrühe.

VI. 3 Gew.-Teile der Verbindung Nr. 30 werden mit 97 Gew.-Teilen feinteiligem Kaolin innig vermischt. Man erhält auf diese Weise ein Stäubemittel, das 3 Gew.-% des Wirkstoffs enthält.

VII. 30 Gew.-Teile der Verbindung Nr. 28 werden mit einer Mischung aus 92 Gew.-Teilen pulverförmigem Kieselsäuregel und 8 Gew.-Teilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

VIII. 40 Gew.-Teile der Verbindung Nr. 44 werden mit 10 Gew.-Teilen Natriumsalz eines Phenolsulfonsäure-harnstoff-formaldehyd-Kondensates, 2 Gew.-Teilen Kieselgel und 48 Gew.-Teilen Wasser innig vermischt. Man erhält eine stabile wäßrige Dispersion. Durch Verdünnen mit Wasser erhält man eine wäßrige Dispersion.

IX. 20 Gew.-Teile der Verbindung Nr. 47 werden mit 2 Gew.-Teilen Calciumsalz der Dodecylbenzolsulfonsäure, 8 Gew.-Teilen Fettalkoholpolyglykolether, 2 Gew.-Teilen Natriumsalz eines Phenolsulfonsäure-harnstoff-formaldehyd-Kondensats und 68 Gew.-Teilen eines paraffinischen Mineralöls innig vermischt. Man erhält eine stabile ölige Dispersion.

Die erfindungsgemäßen Mittel können in diesen Anwendungsformen auch zusammen mit anderen Wirkstoffen vorliegen, wie z.B. Herbiziden, Insektiziden, Wachstumsregulatoren und Fungiziden, oder auch mit Düngemitteln vermischt und ausgebracht werden. Beim Vermischen mit Fungiziden erhält man dabei in vielen Fällen eine Vergrößerung des fungiziden Wirkungsspektrums.

Die folgende Liste von Fungiziden, mit denen die erfindungsgemäßen Verbindungen kombiniert werden können, soll die Kombinationsmöglichkeiten erläutern, nicht aber einschränken.

Fungizide, die mit den erfindungsgemäßen Verbindungen kombiniert werden können, sind beispielsweise:

Schwefel,
Dithiocarbamate und deren Derivate, wie
Ferridimethyldithiocarbamat,
Zinkdimethyldithiocarbamat,
Zinkethylenbisdithiocarbamat,
Manganethylenbisdithiocarbamat,
Mangan-Zink-ethylendiamin-bis-dithiocarbamat,
Tetramethylthiuramidsulfide,
Ammoniak-Komplex von Zink-(N,N-ethylen-bis-dithiocarbamat),
Ammoniak-Komplex von Zink-(N,N'-propylen-bis-dithiocarbamat),
Zink-(N,N'-propylen-bis-dithiocarbamat),
N,N'-Polypropylen-bis-(thiocarbamoyl)-disulfid;
Nitroderviate, wie
Dinitro-(1-methylheptyl)-phenylcrotonat,
2-sec-Butyl-4,6-dinitrophenyl-3,3-dimethylacrylat,
2-sec-Butyl-4,6-dinitrophenyl-isopropylcarbonat;
5-Nitro-isophthalsäure-di-isopropylester

heterocyclische Substanzen, wie
2-Heptadecyl-2-imidazolin-acetat,
2,4-Dichlor-6-(o-chloranilino)-s-triazin,
0,0-Diethyl-phthalimidophosphonothioat,
5-Amino-1-[bis-(dimethylamino)-phosphinyl]-3-phenyl-1,2,4-triazol,

2,3-Dicyano-1,4-dithioanthrachinon,
2-Thio-1,3-dithio-(4,5-b)-chinoxalin,
1-(Butylcarbamoyl)-2-benzimidazol-carbaminsäuremethylester,
2-Methoxycarbonylamino-benzimidazol,
2-(Furyl-(2))-benzimidazol,
2-(Thiazolyl-(4))-benzimidazol,
N-(1,1,2,2-Tetrachlorethylthio)-tetrahydrophthalimid,
N-Trichlormethylthio-tetrahydrophthalimid,
N-Trichlormethylthio-phthalimid,

N-Dichlorfluormethylthio-N',N'-dimethyl-N-phenyl-schwefelsäurediamid,
5-Ethoxy-3-trichlormethyl-1,2,3-thiadiazol,
2-Rhodanmethylthiobenzthiazol,
1,4-Dichlor-2,5-dimethoxybenzol,
4-(2-Chlorphenylhydroazano)-3-methyl-5-isoxazolon,
Pyridin-2-thio-1-oxid,
8-Hydroxychinolin bzw. dessen Kupfersalz,
2,3-Dihydro-5-carboxanilido-6-methyl-1,4-oxathiin,
2,3-Dihydro-5-carboxanilido-6-methyl-1,4-oxathiin-4,4-dioxid,
2-Methyl-5,6-dihydro-4H-pyran-3-carbonsäure-anilin,
2-Methyl-furan-3-carbonsäureanilid,
2,5-Dimethyl-furan-3-carbonsäureanilid,
2,4,5-Trimethyl-furan-3-carbonsäureanilid,
2,5-Dimethyl-furan-3-carbonsäurecyclohexylamid,
N,Cyclohexyl-N-methoxy-2,5-dimethyl-furan-3-carbonsäureamid,
2-Methyl-benzoesäure-anilid,
2-Iod-benzoesäure-anilid,
N-Formyl-N-morpholin-2,2,2-trichlorethylacetal,
Piperazin-1,4-diylbis-(1-(2,2,2-trichlor-ethyl)-formamid,
1-(3,4-Dichloranilino)-1-formylamino-2,2,2-trichlorethan,
2,6-Dimethyl-N-tridecyl-morpholin bzw. dessen Salze,
2,6-Dimethyl-N-cyclodedecyl-morpholin bzw. dessen Salze,
N-[3-(p-tert.-Butylphenyl)-2-methylpropyl]-cis-2,6-dimethylmorpholin,
N-[3-(p-tert.-Butylphenyl)-2-methylpropyl]-piperdin,
1-[2-(2,4-Dichlorphenyl)-4-ethyl-1,3-dioxolan-2-yl-ethyl]-1H,2,4-triazol
1-[(2-(2,4-Dichlorphenyl)-4-n-propyl-1,3-dioxolan-2-yl-ethyl]-1H-1,2,4-triazol,
N-(n-Propyl)-N-(2,4,6-trichlorphenoxyethyl)-N'-imidazol-yl-harnstoff,
1-(4-Chlorphenoxy)-3,3-dimethyl-1-(1H-1,2,4-triazol-1-yl)-2-butanon,
1-(4-Chlorphenoxy)-3,3-dimethyl-1-(1H-1,2,4-triazol-1-yl)-2-butanol,
α-(2-Chlorphenyl-α-(4-chlorphenyl)-5-pyrimidin-methanol,
5-Butyl-2-dimethylamino-4-hydroxy-6-methyl-pyrimidin,
Bis-(p-chlorphenyl)-3-pyridinmethanol,
1,2-Bis-(3-ethoxycarbonyl-2-thioureido)-benzol,
1,2-Bis-(3-methoxycarbonyl-2-thioureido)-benzol,

sowie verschiedene Fungizide, wie
Dodecylguanidinacetat,
3-[3-(3,5-Dimethyl-2-oxycyclohexyl)-2-hydroxyethyl]-glutarimid,
Hexachlorbenzol,
DL-Methyl-N-(2,6-dimethyl-phenyl)-N-furoyl(2)-alaninat,
DL-N-(2,6-Dimethyl-phenyl)-N-(2'-methoxyacetyl)-alanin-methylester,
N-(2,6-Dimethyl-phenyl)-N-chloracetyl-D-L-2-aminobutyrolacton,
DL-N-(2,6-Dimethylphenyl)-N-(phenylacetyl)-alaninmethylester,
5-Methyl-5-vinyl-3-(3,5-dichlorphenyl)-2,4-dioxo-1,3-oxazolidin,
3-[3,5-Dichlorphenyl(-5-methyl-5-methoxymethyl]-1,3-oxazolidin-2,4-dion,
3-(3,5-Dichlorphenyl)-1-isopropylcarbamoylhydantoin,
N-(3,5-Dichlorphenyl)-1,2-dimethylcyclopropan-1,2-dicarbonsäureimid,
2-Cyano-[N-(ethylaminocarbonyl)-2-methoximino]-acetamid,
1-[2-(2,4-Dichlorphenyl)-pentyl]-1H-1,2,4-triazol,
2,4-Difluor-α-(1H-1,2,4-triazolyl-1-methyl)-benzhydrylalkohol,
N-(3-Chlor-2,6-dinitro-4-trifluormethyl-phenyl)-5-trifluormethyl-3-chlor-2-aminopyridin,
1-((bis-(4-Fluorphenyl)-methylsilyl)-methyl)-1H-1,2,4-triazol.

**Patentansprüche**

1. trans-4-substituierte Cyclohexylaminderivate der Formel

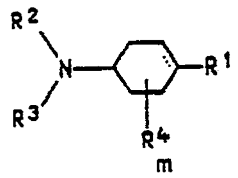

in der

$R^1$ die Gruppe $CR^5R^6R^7$ bedeutet, n welcher $R^5$, $R^6$, $R^7$ gleich oder verschieden sind und Wasserstoff, verzweigtes oder unverzweigtes, gegebenenfalls mit Hydroxy substituiertes $C_1$–$C_8$-Alkyl, $C_1$–$C_6$-Alkoxy, $C_1$–$C_6$-Alkylthio oder $C_3$–$C_6$-Cycloalkyl bedeuten, mit der Maßgabe, daß höchstens einer der Substituenten $R^5$, $R^6$ oder $R^7$ Wasserstoff sein darf, oder in welcher $R^5$ eine der vorstehend angegebenen Bedeutungen hat und $R^6$ und $R^7$ gemeinsam mit dem eingeschlossenen C-Atom einen drei- bis sechsgliedrigen carbocyclischen aliphatischen Ring bilden,

$R^2$, $R^3$ gleich oder verschieden sind und Wasserstoff, $C_1$–$C_{20}$-Alkyl, $C_2$–$C_4$-Alkenyl oder $C_3$–$C_4$-Alinyl oder $C_3$–$C_{12}$-Cycloalkyl oder $C_5$–$C_8$-Cycloalkenyl bedeuten, die ihrerseits wiederum substituiert sein können mit Hydroxy, $C_1$–$C_8$-Alkoxy, $C_1$–$C_6$-Alkylthio, $C_1$–$C_8$-Alkyl, $C_2$–$C_4$-Alkenyl, $C_3$–$C_4$-Alkinyl oder ggf. substituiertem $C_3$–$C_{12}$-Cycloalkyl oder mit Phenyl, Naphthyl, Phenoxy oder Naphthoxy, die ihrerseits ggf. durch $C_1$–$C_8$-Alkyl, $C_2$–$C_4$-Alkenyl, $C_3$–$C_4$-Alkinyl oder $C_3$–$C_6$-Cycloalkyl oder $C_5$–$C_8$-Cycloalkenyl, $C_2$–$C_8$-Alkoxy, Halogen oder Trifluormethyl substituiert sein können, mit der Maßgabe, daß die Summe der Kohlenstoff- und Heteroatome (O, S, Halogen) von $R^2$ und $R^3$ zusammen mindestens 8 beträgt,

$R^4$ gleiche oder verschiedene Substituenten ausgewählt aus Wasserstoff, $C_1$- bis $C_8$-Alkyl, $C_3$- bis $C_8$-Cycloalkyl oder $C_1$- bis $C_8$-Alkoxy sowie m die Zahlen 1 bis 4 bedeutet,

und die ⋯ Bindung eine Einfachbindung oder eine Doppelbindung ist,

sowie deren Salze, außer den Verbindungen, in denen gleichzeitig $R^1$ tertiär-Butyl, einer der beiden Reste $R^2$ und $R^3$ Wasserstoff und der andere Rest unsubstituiertes $C_8$–$C_{12}$-Alkyl und $R^4$ Wasserstoff bedeutet.

2. Fungizides Mittel, enthaltend eine fungizid wirksame Menge eines trans-4-substituierten Cyclohexylaminderivats der Formel

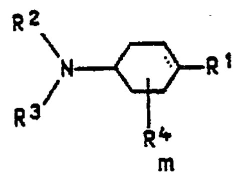

in der

$R^1$ die Gruppe $CR^5R^6R^7$ bedeutet, in welcher $R^5$, $R^6$, $R^7$ gleich oder verschieden sind und Wasserstoff, verzweigtes oder unverzweigtes, gegebenenfalls mit Hydroxy substituiertes $C_1$–$C_8$-Alkyl, $C_1$–$C_6$-Alkoxy, $C_1$–$C_6$-Alkylthio oder $C_3$–$C_6$-Cycloalkyl bedeuten, mit der Maßgabe, daß höchstens einer der Substituenten $R^5$, $R^6$ oder $R^7$ Wasserstoff sein darf, oder in welcher $R^5$ eine der vorstehend angegebenen Bedeutungen hat und $R^6$ und $R^7$ gemeinsam mit dem eingeschlossenen C-Atom einen drei- bis sechsgliedrigen carbocyclischen aliphatischen Ring bilden,

$R^2$, $R^3$ gleich oder verschieden sind und Wasserstoff, $C_1$–$C_{20}$-Alkyl, $C_2$–$C_4$-Alkenyl oder $C_3$–$C_4$-Alkinyl oder $C_3$–$C_{12}$-Cycloalkyl oder $C_5$–$C_8$-Cycloalkenyl bedeuten, die ihrerseits wiederum substituiert sein können mit Hydroxy, $C_1$–$C_8$-Alkoxy, $C_1$–$C_6$-Alkylthio, $C_1$–$C_8$-Alkyl, $C_2$–$C_4$-Alkenyl, $C_3$–$C_4$-Alkinyl oder ggf. substituiertem $C_3$–$C_{12}$-Cycloalkyl oder mit Phenyl, Naphthyl, Phenoxy oder Naphthoxy, die ihrerseits ggf. durch $C_1$–$C_8$-Alkyl, $C_2$–$C_4$-Alkenyl, $C_3$–$C_4$-Alkinyl oder $C_3$–$C_6$-Cycloalkyl oder $C_5$–$C_8$-Cycloalkenyl, $C_2$–$C_8$-Alkoxy, Halogen oder Trifluormethyl substituiert sein können, mit der Maßgabe, daß die Summe der Kohlenstoff- und Heteroatome (O, S, Halogen) von $R^2$ und $R^3$ zusammen mindestens 8 beträgt,

$R^4$ gleiche oder verschiedene Substituenten ausgewählt aus Wasserstoff, $C_1$- bis $C_8$-Alkyl, $C_3$- bis $C_8$-Cycloalkyl oder $C_1$- bis $C_8$-Alkoxy sowie m die Zahlen 1 bis 4 bedeutet,

und die ⋯ Bindung eine Einfachbindung oder eine Doppelbindung ist,

sowie dessen Salze, außer den Verbindungen, in denen gleichzeitig $R^1$ tertiär-Butyl, einer der beiden Reste $R^2$ und $R^3$ Wasserstoff und der andere Rest unsubstituiertes $C_8$–$C_{12}$-Alkyl und $R^4$ Wasserstoff bedeutet, und einen festen oder flüssigen Trägerstoff.

3. Verfahren zur Herstellung von Fungiziden, dadurch gekennzeichnet, daß man eine Verbindung gemäß Anspruch 1 mit einem festen oder flüssigen Trägerstoff mischt.

4. Verfahren zur Bekämpfung von Pilzen, dadurch gekennzeichnet, daß man eine fungizid wirksame Menge eines trans-4-substituierten Cyclohexylaminderivates der Formel

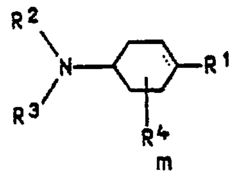

in der

$R^1$ die Gruppe $CR^5R^6R^7$ bedeutet, in welcher $R^5$, $R^6$, $R^7$ gleich oder verschieden sind und Wasserstoff, verzweigtes oder unverzweigtes, gegebenenfalls mit Hydroxy substituiertes $C_1$–$C_8$-Alkyl, $C_1$–$C_6$-Alkoxy, $C_1$–$C_6$-Alkylthio oder $C_3$–$C_6$-Cycloalkyl bedeuten, mit der Maßgabe, daß höchstens einer der Substituenten $R^5$, $R^6$ oder $R^7$ Wasserstoff sein darf, oder in welcher $R^5$ eine der vorstehend angegebenen Bedeutungen hat und $R^6$ und $R^7$ gemeinsam mit dein eingeschlossenen C-Atom einen drei- bis sechsgliedrigen carbocyclischen aliphatischen Ring bilden,

$R^2$, $R^3$ gleich oder verschieden sind und Wasserstoff, $C_1$–$C_{20}$-Alkyl, $C_2$–$C_4$-Alkenyl oder $C_3$–$C_4$-Alkinyl oder $C_3$–$C_{12}$-Cycloalkyl oder $C_5$–$C_8$-Cycloalkenyl bedeuten, die ihrerseits wiederum substituiert sein können mit Hydroxy, $C_1$–$C_8$-Alkoxy, $C_1$–$C_6$-Alkylthio, $C_1$–$C_8$-Alkyl, $C_2$–$C_4$-Alkenyl, $C_3$–$C_4$-Alkinyl oder ggf. substituiertem $C_3$–$C_{12}$-Cycloalkyl oder mit Phenyl, Naphthyl, Phenoxy oder Naphthoxy, die ihrerseits ggf. durch $C_1$–$C_8$-Alkyl, $C_2$–$C_4$-Alkenyl, $C_3$–$C_4$-Alkinyl oder $C_3$–$C_6$-Cycloalkyl oder $C_5$–$C_8$-Cycloalkenyl, $C_2$–$C_8$-Alkoxy, Halogen oder Trifluormethyl substituiert sein können, mit der Maßgabe, daß die Summe der Kohlenstoff- und Heteroatome (O, S, Halogen) von $R^2$ und $R^3$ zusammen mindestens 8 beträgt,

$R^4$ gleiche oder verschiedene Substituenten ausgewählt aus Wasserstoff, $C_1$- bis $C_8$-Alkyl, $C_3$- bis $C_8$-Cycloalkyl oder $C_1$- bis $C_8$-Alkoxy sowie m die Zahlen 1 bis 4 bedeutet,

und die ⋯ Bindung eine Einfachbindung oder eine Doppelbindung ist,

sowie dessen Salze, außer den Verbindungen, in denen gleichzeitig $R^1$ tertiär-Butyl, einer der beiden Reste $R^2$ und $R^3$ Wasserstoff und der andere Rest unsubstituiertes $C_8$–$C_{12}$-Alkyl und $R^4$ Wasserstoff bedeutet, auf diese oder auf durch Pilzbefall bedrohte Materialien, Flächen, Pflanzen oder Saatgut einwirken läßt.

5. trans-N-(4-tertiär-Butylbenzyl)-4-tertiär-Butylcyclohexylamin.

## Claims

1. A trans-4-substituted cyclohexylamine derivative of the formula

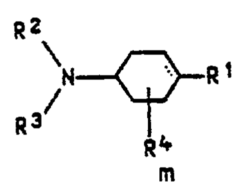

where $R^1$ is the group $CR^5R^6R^7$, in which $R^5$, $R^6$ and $R^7$ are identical or different and are each hydrogen, branched or straight-chain, unsubstituted or hydroxyl-substituted $C_1$–$C_8$-alkyl, $C_1$–$C_6$-alkoxy, $C_1$–$C_6$-alkylthio or $C_3$–$C_6$-cycloalkyl, with the proviso that not more than one of the substituents $R^5$, $R^6$ and $R^7$ may be hydrogen, or in which $R^5$ has one of the above meanings and $R^6$ and $R^7$ together with the included carbon atom form a three-membered to six-membered carbocyclic aliphatic ring, $R^2$ and $R^3$ are identical or different and are each hydrogen, $C_1$–$C_{20}$-alkyl, $C_2$–$C_4$-alkenyl or $C_3$- or $C_4$-alkynyl or $C_3$–$C_{12}$-cycloalkyl or $C_5$–$C_8$-cycloalkenyl, which in turn may be substituted by hydroxyl, $C_1$–$C_8$-alkoxy, $C_1$–$C_6$-alkylthio, $C_1$–$C_8$-alkyl, $C_2$–$C_4$-alkenyl, $C_3$- or $C_4$-alkynyl or unsubstituted or substituted $C_3$–$C_{12}$-cycloalkyl or by phenyl, naphthyl, phenoxy or naphthyloxy, which in turn may be unsubstituted or substituted by $C_1$–$C_8$-alkyl, $C_2$–$C_4$-alkenyl, $C_3$- or $C_4$-alkynyl or $C_3$–$C_6$-cycloalkyl or $C_5$–$C_8$-cycloalkyl, $C_2$–$C_8$-alkoxy, halogen or tifluoromethyl, with the proviso that the sum of the carbon atoms and hetero atoms (O, S and halogen) of $R^2$ and $R^3$ together is not less than 8, the radicals $R^4$ are identical or different substituents selected from the group consisting of hydrogen, $C_1$–$C_8$-alkyl, $C_3$–$C_8$-cycloalkyl and $C_1$–$C_8$-alkoxy, and m is 1 to 4, and the ⋯ bond is a single or a double bond, or a salt thereof, with the exception of a compound in which at one and the same time $R^1$ is tert-butyl, one of $R^2$ and $R^3$ is hydrogen and the other is unsubstituted $C_8$–$C_{12}$-alkyl, and $R^4$ is hydrogen.

2. A fungicidal composition containing a fungicidally effective amount of a trans-4-substituted cyclohexylamine derivative of the formula

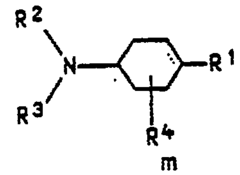

where $R^1$ is the group $CR^5R^6R^7$, in which $R^5$, $R^6$ and $R^7$ are identical or different and are each hydrogen, branched or straight-chain, unsubstituted or hydroxyl-substituted $C_1$–$C_8$-alkyl, $C_1$–$C_6$-alkoxy, $C_1$–$C_6$-alkylthio or $C_3$–$C_6$-cycloalkyl, with the proviso that not more than one of the substituents $R^5$, $R^6$ and $R^7$ may be hydrogen, or in which $R^5$ has one of the above meanings and $R^6$ and $R^7$ together with the included carbon atom form a three-membered to six-membered carbocyclic aliphatic ring, $R^2$ and $R^3$ are identical or different and are each hydrogen, $C_1$–$C_{20}$-alkyl, $C_2$–$C_4$-alkenyl or $C_3$- or $C_4$-alkynyl or $C_3$–$C_{12}$-cycloalkyl or $C_5$–$C_8$-cycloalkenyl, which in turn may be substituted by hydroxyl, $C_1$–$C_8$-alkoxy, $C_1$–$C_6$-alkylthio, $C_1$–$C_8$-alkyl, $C_2$–$C_4$-alkenyl, $C_3$- or $C_4$-alkynyl or unsubstituted or substituted $C_3$–$C_{12}$-cycloalkyl or by phenyl, naphthyl, phenoxy or naphthyloxy, which in turn may be unsubstituted or substituted by $C_1$–$C_8$-alkyl, $C_2$–$C_4$-alkenyl, $C_3$- or $C_4$-alkynyl or $C_3$–$C_6$-cycloalkyl or $C_5$–$C_8$-cycloalkenyl, $C_2$–$C_8$-alkoxy, halogen or trifluoromethyl, with the proviso that the sum of the carbon atoms and hetero atoms (O, S and halogen) of $R^2$ and $R^3$ together is not less than 8, the radicals $R^4$ are identical or different substituents selected from the group consisting of hydrogen, $C_1$–$C_8$-alkyl, $C_3$–$C_8$-cycloalkyl and $C_1$–$C_8$-alkoxy, and m is 1 to 4, and the ⋯ bond is a single or a double bond, or a salt thereof, with the exception of a compound in which at one and the same time $R^1$ is tert-butyl, one of $R^2$ and $R^3$ is hydrogen and the other is unsubstituted $C_8$–$C_{12}$-alkyl, and $R^4$ is hydrogen, and a solid or liquid carrier.

3. A process for preparing a fungicidal composition, wherein a compound as claimed in claim 1 is mixed with a solid or liquid carrier.

4. A method for controlling fungi, wherein a fungicidally effective amount of a trans-4-substituted cyclohexylamine derivative of the formula

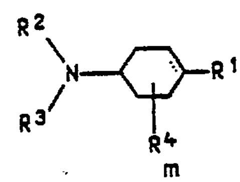

where $R^1$ is the group $CR^5R^6R^7$, in which $R^5$, $R^6$ and $R^7$ are identical or different and are each hydrogen, branched or straight-chain, unsubstituted or hydroxyl-substituted $C_1$–$C_8$-alkyl, $C_1$–$C_6$-alkoxy, $C_1$–$C_6$-alkylthio or $C_3$–$C_5$-cycloalkyl, with the proviso that not more than one of the substituents $R^5$, $R^6$ and $R^7$ may be hydrogen, or in which $R^5$ has one of the above meanings and $R^6$ and $R^7$ together with the included carbon atom a three-membered to six-membered carbocyclic aliphatic ring, $R^2$ and $R^3$ are identical or different and are each hydrogen, $C_1$–$C_{20}$-alkyl, $C_2$–$C_4$-alkenyl or $C_3$- or $C_4$-alkynyl or $C_3$–$C_{12}$-cycloalkyl or $C_5$–$C_8$-cycloalkenyl, which in turn may be substituted by hydroxyl, $C_1$–$C_8$-alkoxy, $C_1$–$C_6$-alkylthio, $C_1$–$C_8$-alkyl, $C_2$–$C_4$-alkenyl, $C_3$- or $C_4$-alkynyl or unsubstituted or substituted $C_3$–$C_{12}$-cycloalkyl or by phenyl, naphthyl, phenoxy or naphthyloxy, which in turn may be unsubstituted or substituted by $C_1$–$C_8$-alkyl, $C_2$–$C_4$-alkenyl, $C_3$- or $C_4$-alkynyl or $C_3$–$C_6$-cycloalkyl or $C_5$–$C_8$-cycloalkenyl, $C_2$–$C_8$-alkoxy, halogen or trifluoromethyl, with the proviso that the sum of the carbon atoms and hetero atoms (O, S and halogen) of $R^2$ and $R^3$ together is not less than 8, the radicals $R^4$ are identical or different substituents selected from the group consisting of hydrogen, $C_1$–$C_8$-alkyl, $C_3$–$C_8$-cycloalkyl and $C_1$–$C_8$-alkoxy, and m is 1 to 4, and the ⋯ bond is a single or a double bond, or a salt thereof, with the exception of a compound in which at one and the same time $R^1$ is tert-butyl, one of $R^2$ and $R^3$ is hydrogen and the other is unsubstituted $C_8$–$C_{12}$-alkyl and $R^4$ is hydrogen, is allowed to act on fungi or on materials, areas, plants or seed threatened by fungal attack.

5. trans-N-(4-tert-butylbenzyl)-4-tert-butylcyclo-hexylamine.

**Revendications**

1. Dérivés de cyclohexylamine substitués en trans-4, de formule

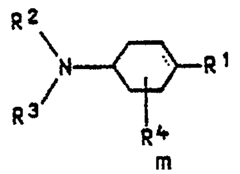

dans laquelle

$R^1$ représente le groupe $CR^5R^6R^7$, où $R^1$, $R^6$, $R^7$ sont identiques ou différents et représentent hydrogène, alkyle en $C_1$–$C_8$, alcoxy en $C_1$–$C_6$, alkylthio en $C_1$–$C_6$ ou cycloalkyle en $C_3$–$C_6$, ramifié ou non ramifié, eventuellement substitué avec hydroxy, sous réserve qu'au plus un des substituants $R^5$, $R^6$ ou $R^7$ puisse être hydrogène, ou dans lequel $R^5$ a l'une des significations données précédemment et $R^6$ et $R^7$ ensemble avec l'atome C inclus forment un noyau aliphatique, carbocyclique de trois à six chaînons.

$R^2$, $R^3$ sont identiques ou différents et représentent hydrogène, alkyle en $C_1$–$C_{20}$, alcényle en $C_2$–$C_4$ ou alcinyle en $C_3$–$C_4$ ou cycloalkyle en $C_3$–$C_{12}$ ou cycloalcényle en $C_5$–$C_8$, qui à leur tour, peuvent à nouveau être substitués avec hydroxy, alcoxy en $C_1$–$C_8$, alkylthio en $C_1$–$C_8$, alkyle en $C_1$–$C_8$, alcényle en $C_2$–$C_4$, alcinyle en $C_3$–$C_4$ ou cycloalkyle en $C_3$–$C_{12}$ éventuellement substitué, ou avec phényle, naphtyle, phénoxy ou naphtoxy, qui, à leur tour peuvent être substitués éventuellement par alkyle en $C_1$–$C_8$, alcényle en $C_2$–$C_4$, alcinyle en $C_3$–$C_4$, ou cycloalkyle en $C_3$–$C_6$ ou cycloalcényle en $C_5$–$C_8$, alcoxy en $C_2$–$C_8$, halogène ou trifluorométhyle, sous réserve que la somme des atomes et hétéroatomes (O, S, halogène) de $R^2$ et $R^3$, ensemble, soit d'au moins 8.

$R^4$ représente des substituants identiques ou différents choisis parmi hydrogène, alkyle en $C_1$ à $C_8$, cycloalkyle en $C_3$ à $C_8$ ou alcoxy en $C_1$ à $C_8$ et m est un nombre de 1 à 4

et la liaison ⋯ est une liaison simple ou une double liaison

ainsi que leurs sels, à l'exception ces composés dans lesquels, simultanément, $R^1$ représente tert-butyle, un des deux restes $R^2$ et $R^3$ représente hydrogène et l'autre reste représente alkyle en $C_8$–$C_{12}$ non substitué et $R^4$ représente hydrogène.

2. Agent fongicide contenant une quantité efficace du point de vue fongicide d'un dérivé de cyclohexylamine substitué en trans-4, de formule

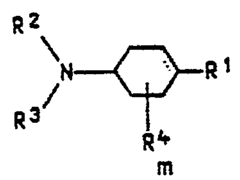

dans laquelle

$R^1$ représente le groupe $CR^5R^6R^7$, où $R^1$, $R^6$, $R^7$ sont identiques ou différents et représentent hydrogène, alkyle en $C_1$–$C_8$, alcoxy en $C_1$–$C_6$, alkylthio en $C_1$–$C_6$ ou cycloalkyle en $C_3$–$C_6$, ramifié ou non ramifié, éventuellement substitué avec hydroxy, sous réserve qu'au plus un des substituants $R^5$, $R^6$ ou $R^7$ puisse être hydrogène, ou dans lequel $R^5$ a l'une des significations données précédemment et $R^6$ et $R^7$ ensemble avec l'atome C inclus forment un noyau aliphatique, carbocyclique de trois à six chaînons.

$R^2$, $R^3$ sont identiques ou différents et représentent hydrogène, alkyle en $C_1$–$C_{20}$, alcényle en $C_2$–$C_4$ ou alcinyle en $C_3$–$C_4$ ou cycloalkyle en $C_3$–$C_{12}$ ou cycloalcényle en $C_5$–$C_8$, qui à leur tour peuvent à nouveau être substitués avec hydroxy, alcoxy en $C_1$–$C_8$, alkylthio en $C_1$–$C_8$, alkyle en $C_1$–$C_8$, alcényle en $C_2$–$C_4$, alcinyle en $C_3$–$C_4$ ou cycloalkyle en $C_3$–$C_{12}$ éventuellement substitué, ou avec phényle, naphtyle, phénoxy ou naphtoxy, qui, à leur tour peuvent être substitués éventuellement par alkyle en $C_1$–$C_8$, alcényle en $C_2$–$C_4$, alcinyle en $C_3$–$C_4$, ou cycloalkyle en $C_3$–$C_6$ ou cycloalcényle en $C_5$–$C_8$, alcoxy en $C_2$–$C_8$, halogène ou trifluorométhyle, sous réserve que la somme des atomes et hétéroatomes (O, S, halogène) de $R^2$ et $R^3$, ensemble, soit d'au moins 8.

$R^4$ représente des substituants identiques ou différents choisis parmi hydrogène, alkyle en $C_1$ à $C_8$, cycloalkyle en $C_3$ à $C_8$ ou alcoxy en $C_1$ à $C_8$ et m est un nombre de 1 à 4

et la liaison ⋯ est une liaison simple ou une double liaison

ainsi que leurs sels, à l'exception des composés dans lesquels, simultanément, $R^1$ représente tert-butyle, un des deux restes $R^2$ et $R^3$ représente hydrogène et l'autre reste représente alkyle en $C_8$–$C_{12}$ non substitué et $R^4$ représente hydrogène.

3. Procédé de préparation de fongicide, caractérisé par le fait que l'on mélange un composé selon la revendication 1 avec un support solide ou liquide.

4. Procédé de lutte contre les champignons, caractérisé par le fait que l'on fait agir sur ceux-ci ou sur les matériaux, surfaces, plantes ou semences menacés par des champignons, une quantité efficace du point de vue fongicide d'un dérivé de cyclohexylamine substitué en trans-4, de formule

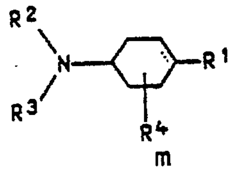

dans laquelle

$R^1$ représente le groupe $CR^5R^6R^7$, où $R^1$, $R^6$, $R^7$ sont identiques ou différents et représentent hydrogène, alkyle en $C_1$–$C_8$, alcoxy en $C_1$–$C_6$, alkylthio en $C_1$–$C_6$ ou cycloalkyle en $C_3$–$C_6$, ramifié ou non ramifié, éventuellement substitué avec hydroxy, sous réserve qu'au plus un des substituants $R^5$, $R^6$ ou $R^7$ puisse être hydrogène, ou dans lequel $R^5$ a l'une des significations données précédemment et $R^6$ et $R^7$ ensemble avec l'atome C inclus forment un noyau aliphatique, carbocyclique de trois à six chaînons.

$R^2$, $R^3$ sont identiques ou différents et représentent hydrogène, alkyle en $C_1$–$C_{20}$, alcényle en $C_2$–$C_4$ ou alcinyle en $C_3$–$C_4$ ou cycloalkyle en $C_3$–$C_{12}$ ou cycloalcényle en $C_5$–$C_8$, qui, à leur tour, peuvent à nouveau être substitués avec hydroxy, alcoxy en $C_1$–$C_8$, alkylthio en $C_1$–$C_8$, alkyle en $C_1$–$C_8$, alcényle en $C_2$–$C_4$, alcinyle en $C_3$–$C_4$ ou cycloalkyle en $C_3$–$C_{12}$ éventuellement substitué, ou avec phényle, naphtyle, phénoxy ou naphtoxy, qui, à leur tour peuvent être substitués éventuellement par alkyle en $C_1$–$C_8$, alcényle en $C_2$–$C_4$, alcinyle en $C_3$–$C_4$, ou cycloalkyle en $C_3$–$C_6$ ou cycloalcényle en $C_5$–$C_8$, alcoxy en $C_2$–$C_8$, halogène ou trifluorométhyle, sous réserve que la somme des atomes et hétéroatomes (O, S, halogène) de $R^2$ et $R^3$ ensemble, sont d'au moins 8.

$R^4$ représente des substituants identiques ou différents choisis parmi hydrogène, alkyle en $C_1$ à $C_8$, cycloalkyle en $C_3$ à $C_8$ ou alcoxy en $C_1$ à $C_8$ et m est un nombre de 1 à 4

et la liaison ⋯ est une liaison simple ou une double liaison

ainsi que leurs sels, à l'exception des composés dans lesquels, simultanément, $R^1$ représente tert-butyle, un des deux restes $R^2$ et $R^3$ représente hydrogène et l'autre reste représente alkyle en $C_8$–$C_{12}$ non substitué et $R^4$ représente hydrogène.

5. Trans-N-(4-tert-.-butylbenzyle)-4-tert.-butylcyclo-hexylamine.